# EUROPEAN PATENT SPECIFICATION

(11) **EP 4 390 058 B1**
(45) Date of publication and mention of the grant of the patent: **15.10.2025**
(21) Application number: 22425061.3
(22) Date of filing: 22.12.2022
(51) Int. Cl.: F01D 5/00, F01D 11/00

(54) **PORTABLE DEVICE AND METHOD FOR MILLING A CIRCUMFERENTIAL BRUSH SEAL OF A GAS TURBINE ASSEMBLY**
TRAGBARE VORRICHTUNG UND VERFAHREN ZUM FRÄSEN EINER UMLAUFENDEN BÜRSTENDICHTUNG EINER GASTURBINENANLAGE
DISPOSITIF PORTABLE ET PROCÉDÉ DE FRAISAGE D'UN JOINT À BROSSE CIRCONFÉRENTIEL D'UN ENSEMBLE DE TURBINE À GAZ

(43) Date of publication of application: 26.06.2024
(73) Proprietor: ANSALDO ENERGIA S.p.A., 16152 Genova (IT)
(72) Inventor: Calandriello, Mauro, 16152 GENOVA (IT)
(74) Representative: Studio Torta S.p.A.

(56) References cited:
- US-A1- 2008 217 859
- US-B1- 6 318 728
- US-B2- 6 681 486

## Description

### Field of the Invention

The present invention relates to the technical field of the gas turbine assembly for power plants. As known, in a power plant gas turbine assembly (in the following only gas turbine) an incoming air flow is compressed by a compressor and mixed with an added fuel in a combustion chamber for producing a hot gas flow to be expanded in a turbine for generating a rotating work on a rotor in turn connected to a generator. In particular, the present invention relates to the field of the service for a gas turbine assembly, i.e. the periodic inspection activities carried out in order to check the integrity of the components forming the assembly or the repairing activities carried out in order to repair components for restoring the assembly. More in detail, the service activity related to the present invention refers to operations to be performed for milling a circumferential brush seal of a gas turbine assembly. In view of the above preliminary considerations related to the technical field of the present invention, the following description will refer to a portable device and to a method for milling a circumferential brush seal of a gas turbine assembly by using this portable device.

### Description of prior art

As known, a gas turbine assembly for power plants comprises a compressor assembly, a combustor assembly and a turbine assembly. The compressor assembly is configured for compressing incoming air supplied at a compressor inlet. The compressed air leaving the compressor assembly flows into a volume (called "plenum") and from there into the combustor assembly. This combustor assembly comprises usually a plurality of burners configured for injecting fuel (oil and/or gas fuel) in the compressed air flow. The mixture of fuel and compressed air enters a combustion chamber where this mixture is combusted. The resulting hot gas flow leaves the combustion chamber and drives in rotation the turbine assembly that performs a work on the rotor (in turn connected to a power generator). As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to disclose a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine comprises a first and a second combustor or a first and a second combustion stage wherein each combustor is provided with a plurality of burners and with at least a relative combustion chamber. Today at least two different kinds of sequential gas turbines are known. According to a first embodiment, the first and the second combustor are annular shaped and are physically separated by a stage of turbine blades, called high pressure turbine. Downstream the second combustor a second turbine unit is present (called low pressure turbine). According to a second embodiment of a sequential gas turbine, the gas turbine is not provided with the high pressure turbine and the combustor assembly is realized in form of a plurality of can-combustors arranged as a ring around the rotor. Each can-combustor comprises a first combustor and a second combustor arranged directly one downstream the other inside a common can shaped casing. These two example of gas turbine assemblies have been cited only as non-limiting examples wherein the present invention can be applied. Indeed, the present invention may be applied in any gas turbine assembly provided that at least a circumferential brush seal is present to be periodically milled.

Substantially all gas turbine assemblies are provided with circumferential brush seals. A circumferential brush seal is a seal made of a metallic material housed in a circumferential groove obtained in the gas turbine casing.

US6318728B1 and US2008/217859 disclose exemplary brush seal applications in turbomachines.

A circumferential brush seal comprises an outer portion constrained, for instance by a mechanical coupling, inside the casing groove and an inner portion brush shaped protruding from the casing towards the turbine axis. Thus, the brush portion of the seal is exposed and needs to be periodically milled for restoring its original features. The skilled person of this field well knows what a circumferential brush seal is and thus additional details are not required for the correct understanding of the context of the present invention.

The prior art practice for restoring the circumferential brush seal by milling its brush portion requires to remove the seal form the casing and put the seal in a separate milling apparatus. Of course, after the milling step, the restored seal has to be housed again inside its casing groove. As self-evident, this prior art involves the drawback of requiring the stop of the system and the moving of the system to the service point where the separate milling apparatus is present.

Thus, today there is the need to implement a new practice for restoring the circumferential brush seal by milling its brush portion wherein the stop of the system is reduced and the milling is performed in situ avoiding the moving of the system and the removal of the seal from its groove.

### Disclosure of the invention

Accordingly, a primary object of the present invention is to provide a portable device for milling a circumferential brush seal of a gas turbine assembly, wherein this portable device is configured for being used onsite ("in-situ") in order to avoid the moving of the system and the removal of the seal from its groove. With the term "portable" we mean a device that can be used by hand by a user without requiring the seal removal acting directly on the inner surface of the casing at the seal.

Before entering into the mechanical details of the portable device, the present invention may also be defined as an alternative method for milling a circumferential brush seal of a gas turbine assembly. Indeed, the prior art practice does not suggest to perform this milling step onsite leaving the seal housed inside its casing groove.

Therefore, the present invention also provides a method for milling a circumferential brush seal of a gas turbine assembly, wherein the method comprises the steps of:
a) providing a portable device that (as will be described in the following) comprises a milling tool;
b) putting in contact the portable device with the inner surface of the casing where the circumferential brush seal is present;
c) milling the circumferential brush seal by circumferentially moving the portable device along the seal leaving the seal housed inside its casing groove.

Thus, the invention involves a reliable and efficient method performed by using a handy (portable and able to be used directly in contact with the casing) milling tool for milling the circumferential brush seal. Please be noted that in a traditional milling process of this seal required the removal of the seal from its seat. On the contrary, according to the present invention the circumferential brush seal is milled leaving the seal into its seat.

As foregoing cited, the Applicant developed a new portable device suitable for performing the method of the invention, i.e. a device configured for milling a circumferential brush seal of a gas turbine assembly when the seal is still housed in its seat obtained in the inner surface of the turbine casing. Therefore, the portable device according to the main definition of the invention comprises:
- a handle configured for being maneuvered by a user; this handle allows the user to put the device in contact with the inner surface of the turbine casing where the seal is present and to circumferentially move the device along the seal;
- a guiding body configured to match the inner surface of the turbine casing for guiding the device during its movements along the seal be casing at the brush seal;
- a milling tool configured for milling the circumferential brush seal during the movement of the device along the seal.

Preferably, the device comprises a motor for driving the rotation of the milling tool. For instance an adjustable pneumatic motor can be provided and controlled by the handle.

Preferably, the milling tool is ogive-shaped having an axis that in use is parallel to the turbine axis orthogonal to the seal.

Preferably, the milling tool is movable along a radial direction.

Preferably, the milling tool is driven in a such a way that the removed parts of the seal during the milling are forced to be raised from the casing surface.

Preferably, the milling tool is arranged at a front portion of the guiding body.

Preferably, the device comprises a magnetic surface arranged in the proximity of the milling tool so that the removed parts of the seal during the milling are attracted and collected on this magnetic surface.

Preferably, the guiding body is commutable into a plurality of different configurations for matching turbine casings having different shape or radius.

Preferably, the guiding body comprises a front and a rear body connected each other in a pivoting manner.

Preferably, the guiding body is realized in form of two parallel plates wherein in use the seal is arranged between the two plates.

Preferably, the surface of guiding body configured to go in contact with the casing comprises at least a magnet and/or at least a ball.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine assembly for power plants;
- figure 2 is a schematic view of a brush seal housed in a casing groove;
- figure 3 is a first view of an example of a portable device according to the present invention;
- figure 4 is a second view of the portable device of figure 3 disclosing the portion configured to go in contact with the casing;
- figure 5 is an enlarged view of a component of the portable device of figure 3.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

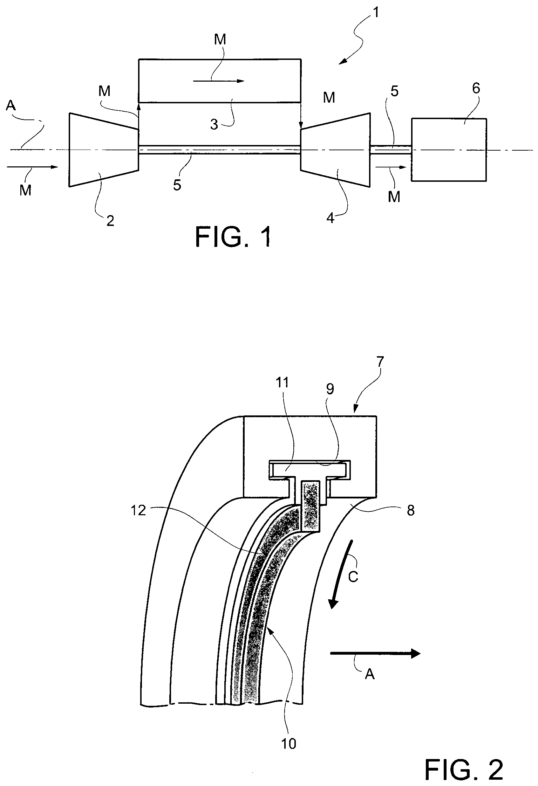

Reference will now be made to the drawing figures to describe the present invention in detail. In particular, reference is made to figure 1 which is a schematic view of a power plant gas turbine assembly that may be improved by the present invention. In general, no particular feature is required for providing a power plant gas turbine assembly suitable to be improved by the present invention. Generally, a gas turbine assembly is an assembly 1 as comprising:
- a compressor 2 for compressing air;
- a combustion chamber 3 for generating a hot gas flow having a main direction M;
- a turbine 4 driven by the hot gas flow for rotating a rotor 5;
- a generator 6 for converting the rotating work of the rotor 5.

Figure 2 is a schematic view of a brush seal 10 housed in a casing groove. In particular, figure 2 discloses a portion of a turbine casing 7 comprising an inner surface 8 wherein a circumferential groove 9 has been obtained. In figure 2 the references with arrows C and A refers to the axial direction A and to the circumferential direction C. These directions, and the third radial direction, are well known by the skilled person in the art. Inside the groove 9 a brush seal 10 is arranged. As disclosed, the seal 10 comprises an inner portion 11 constrained into the groove 9 and an outer portion 12 (brush shaped) protruding from the casing. The shape of the groove 9 and the shape of the seal 10 disclosed in figure 2 are only not limiting examples.

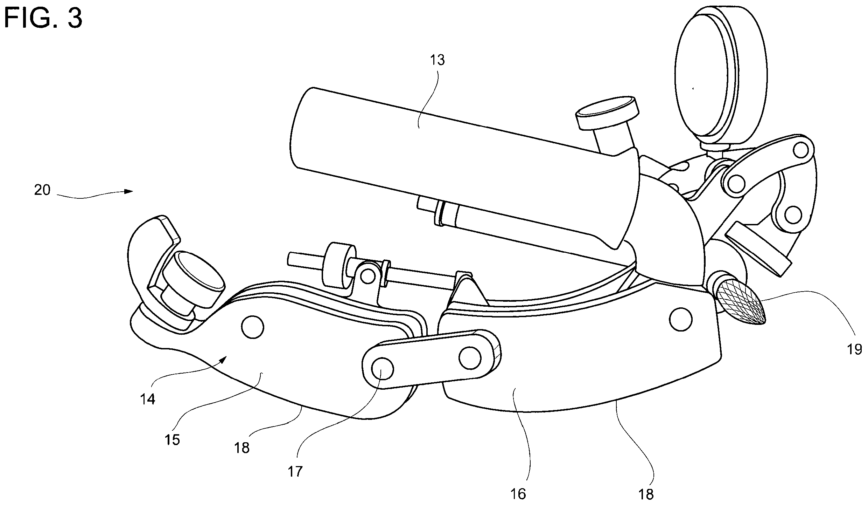

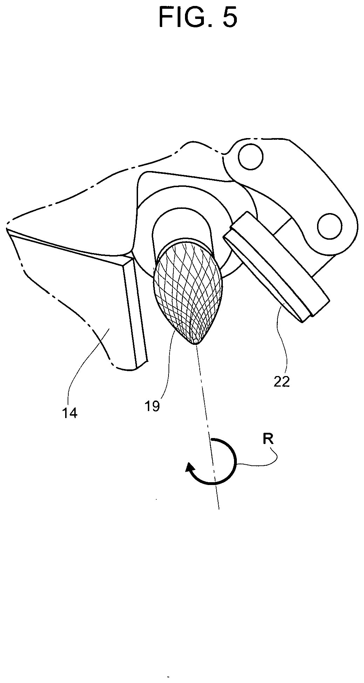

Figure 3 is a first view of an example of a portable device 20 according to the present invention. The scope of this device 20 is to mill the seal 10, in particular its brush portion 12, leaving the seal 10 inside the groove 9. As disclosed in figure 3, the device 20 comprises an handle 13 coupled to a guiding body 14. The guiding body 14 comprises a circular surface 18 for sliding along the circumferential direction on the casing and it is realized in form of two bodies 15 16. These two bodies are connected each other in a pivoting 17 manner so that the guiding body 14 may vary its shape to match different casing profiles. Each body 15 16 forming the guiding body 14 comprises two parallel plates (the distance may be adjusted) so that the seal 10 may stay between the plates during the use of the device 20. The matching surface 18 of the guiding body 14 is circular shaped according to the circular shape of the casing. The front portion of the device 20 is provided with a milling tool 19 ogive-shaped having a rotation axis orthogonal to the guiding direction of the guiding body 14 and to extent of the seal 10 to be milled. In use the rotation axis of the milling tool 19 is parallel to the axial direction of the gas turbine. This milling tool 19 is connected to a pneumatic motor 21 supported by the handle 13 so that during the movement of the device 20 along the casing the milling tool 19 mills the brush portion 12 of the seal 10. Figure 5 is an enlarged view of the device 20 disclosing the milling tool 19. In this figure the direction of rotation of the milling tool 19 is represented with the reference R and this direction of rotation forces the removed portions of the seal 10 toward a magnetic surface 22 arranged near to the milling tool 19. In this example, the position of the milling tool 19 with respect to the guiding body 14 may vary as also the relative position between the milling tool 19 and the magnetic surface 22 may vary.

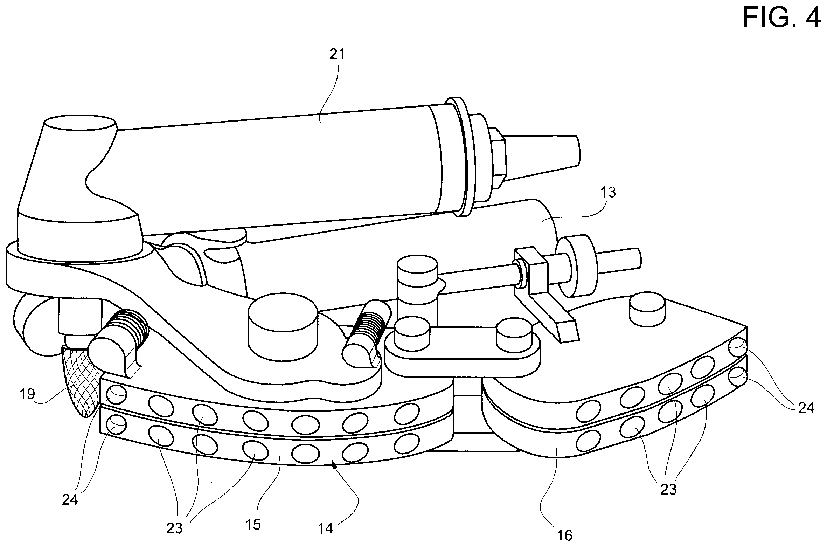

Figure 4 is a second view of the portable device 20 of figure 3 disclosing the portion 18 of the guiding body 14 configured to go in contact with the casing. According to this example, the portion 18 of the guiding body 14 configured to go in contact with the casing is provided with a plurality of magnets 23 and balls 24 for allowing a safe coupling and movement of the device 20 along the casing.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A method for milling a circumferential brush seal (10) housed in a casing groove of a gas turbine assembly, wherein the method comprises the steps of:
a) providing a portable device (20) that comprises a milling tool (19) and a guiding body (14) configured to circumferentially slide along the casing;
b) putting in contact the portable device (20) with the inner surface of the casing where the circumferential brush seal (10) is present;
c) milling the circumferential brush seal (10) by circumferentially moving the portable device (20) along the seal (10) leaving the seal (10) housed inside its casing groove.

2. A portable device for milling a circumferential brush seal (10) housed in a circumferential seat obtained in an inner surface of a turbine casing of a gas turbine assembly, wherein the portable device (20) comprises:
- a handle (13) configured for being maneuvered by a user so that the user can put the device (20) in contact with the inner surface of the turbine casing where the seal (10) is present and circumferentially move the device (20) along the seal (10);
- a guiding body (14) configured to match the inner surface of the turbine casing for guiding the device (20) during its movements along the seal (10);
- a milling tool (19) configured for milling the circumferential brush seal (10) during the movement of the device (20) along the seal (10) leaving the seal (10) in its seat.

3. Device as claimed in claim 2, wherein it comprises a motor (21), preferably an adjustable pneumatic motor, for driving the rotation of the milling tool (19).

4. Device as claimed in any one of the foregoing claims, wherein the milling tool (19) is ogive-shaped having an axis that in use is orthogonal to guiding direction defined by the guiding body (14).

5. Device as claimed in any one of the foregoing claims, wherein the milling tool (19) is movable in an adjustable manner with respect to the guiding body (14).

6. Device as claimed in any one of the foregoing claims, wherein the milling tool (19) is driven along a direction of rotation (R) so that the removed parts of the seal (10) during the milling step are forced to be raised from the casing surface.

7. Device as claimed in any one of the foregoing claims, wherein the milling tool (19) is arranged at a front portion of the guiding body (14).

8. Device as claimed in claim 6 or 7, wherein it comprises a magnetic surface (22) arranged in the proximity of the milling tool (19) so that the removed parts of the seal (10) during the milling step are attracted and collected on the magnetic surface (22).

9. Device as claimed in any one of the foregoing claims, wherein the guiding body (14) is commutable into a plurality of different configurations for matching turbine casings having different circumferential shape or radius.

10. Device as claimed claim 9, wherein the guiding body (14) comprises two bodies (15, 16) connected each other in a pivoting manner (17).

11. Device as claimed claim 10, wherein each body (15, 16) of the guiding body (14) is realized in form of two parallel plates so that in use the seal (10) is arranged between the two plates.

12. Device as claimed claim 11, wherein the distance between the plates is adjustable.

13. Device as claimed in any one of the foregoing claims, wherein the surface (18) of the guiding body (14) configured to go in contact with the casing comprises at least a magnet (23) and/or at least a ball (24).

## Patentansprüche

1. Verfahren zum Fräsen einer umlaufenden Bürstendichtung (10), die in einer Gehäusenut einer Gasturbinenanordnung untergebracht ist, wobei das Verfahren die folgenden Schritte aufweist:
a) Bereitstellen einer tragbaren Vorrichtung (20), die ein Fräswerkzeug (19) und einen Führungskörper (14) aufweist, der dazu konfiguriert ist, in Umfangsrichtung entlang des Gehäuses verschoben zu werden;
b) Bringen der tragbaren Vorrichtung (20) in Kontakt mit der Innenoberfläche des Gehäuses, wo die umlaufende Bürstendichtung (10) vorhanden ist;
c) Fräsen der umlaufenden Bürstendichtung (10) durch Bewegen der tragbaren Vorrichtung (20) in Umfangsrichtung entlang der Dichtung (10), wodurch die Dichtung (10) in der Gehäusenut untergebracht verbleibt.

2. Tragbare Vorrichtung zum Fräsen einer umlaufenden Bürstendichtung (10), die in einem umlaufenden Sitz untergebracht ist, der in einer Innenoberfläche eines Turbinengehäuses einer Gasturbinenanordnung erhalten wird, wobei die tragbare Vorrichtung (20) aufweist:
- einen Handgriff (13), der dazu konfiguriert ist, von einem Benutzer so gehandhabt zu werden, dass der Benutzer die Vorrichtung (20) mit der Innenoberfläche des Turbinengehäuses in Kontakt bringen kann, wo die Dichtung (10) vorhanden ist, und die Vorrichtung (20) in Umfangsrichtung entlang der Dichtung (10) bewegen kann;
- einen Führungskörper (14), der dazu konfiguriert ist, mit der Innenoberfläche des Turbinengehäuses zusammenzupassen, um die Vorrichtung (20) während ihrer Bewegungen entlang der Dichtung (10) zu führen;
- ein Fräswerkzeug (19), das zum Fräsen der umlaufenden Bürstendichtung (10) während der Bewegung der Vorrichtung (20) entlang der Dichtung (10) konfiguriert ist, wobei die Dichtung (10) in ihrem Sitz verbleibt.

3. Vorrichtung gemäß Anspruch 2, wobei sie einen Motor (21), vorzugsweise einen einstellbaren Pneumatikmotor, aufweist, um die Drehung des Fräswerkzeugs (19) anzutreiben.

4. Vorrichtung gemäß einem der vorhergehenden Ansprüche, wobei das Fräswerkzeug (19) spitzbogenförmig ist und eine Achse hat, die in der Verwendung im rechten Winkel zur von dem Führungskörper (14) definierten Führungsrichtung ist.

5. Vorrichtung gemäß einem der vorhergehenden Ansprüche, wobei das Fräswerkzeug (19) in einer einstellbaren Weise bezüglich des Führungskörpers (14) beweglich ist.

6. Vorrichtung gemäß einem der vorhergehenden Ansprüche, wobei das Fräswerkzeug (19) entlang einer Richtung einer Drehung (R) angetrieben wird, sodass die während des Frässchrittes entfernten Teile der Dichtung (10) zwangsweise von der Gehäuseoberfläche abgehoben werden.

7. Vorrichtung gemäß einem der vorhergehenden Ansprüche, wobei das Fräswerkzeug (19) an einem vorderen Teil des Führungskörpers (14) angeordnet ist.

8. Vorrichtung gemäß Anspruch 6 oder 7, wobei sie eine magnetische Oberfläche (22) aufweist, die in der Nähe des Fräswerkzeugs (19) angeordnet ist, sodass die während des Frässchrittes entfernten Teile der Dichtung (10) angezogen werden und auf der magnetischen Oberfläche (22) gesammelt werden.

9. Vorrichtung gemäß einem der vorhergehenden Ansprüche, wobei der Führungskörper (14) in eine Mehrzahl unterschiedlicher Konfigurationen änderbar ist, um sich an Turbinengehäuse anzupassen, die unterschiedliche Umfangsformen oder Radien haben.

10. Vorrichtung gemäß Anspruch 9, wobei der Führungskörper (14) zwei Körper (15, 16) aufweist, die in einer schwenkbaren Weise (17) miteinander verbunden sind.

11. Vorrichtung gemäß Anspruch 10, wobei jeder Körper (15, 16) des Führungskörpers (14) in der Form zweier paralleler Platten umgesetzt ist, sodass in der Verwendung die Dichtung (10) zwischen den beiden Platten angeordnet ist.

12. Vorrichtung gemäß Anspruch 11, wobei der Abstand zwischen den Platten einstellbar ist.

13. Vorrichtung gemäß einem der vorhergehenden Ansprüche, wobei die Oberfläche (18) des Führungskörpers (14), die dazu konfiguriert ist, mit dem Gehäuse in Kontakt zu kommen, mindestens einen Magneten (23) und/oder mindestens eine Kugel (24) aufweist.

## Revendications

1. Procédé pour fraiser un joint à brosse circonférentiel (10) logé dans une rainure de carter d'un ensemble de turbine à gaz, dans lequel le procédé comprend les étapes comprenant les faits de :
a) prévoir un dispositif portable (20) qui comprend un outil de fraisage (19) et un corps de guidage (14) configuré pour coulisser de manière circonférentielle le long du carter ;
b) mettre en contact le dispositif portable (20) avec la surface interne du carter où le joint à brosse circonférentiel (10) est présent ;
c) fraiser le joint à brosse circonférentiel (10) en déplaçant, de manière circonférentielle, le dispositif portable (20) le long du joint (10) laissant le joint (10) logé à l'intérieur de sa rainure de carter.

2. Dispositif portable pour fraiser un joint à brosse circonférentiel (10) logé dans un siège circonférentiel obtenu dans une surface interne d'un carter de turbine d'un ensemble de turbine à gaz, dans lequel le dispositif portable (20) comprend :
- une poignée (13) configurée pour être manœuvrée par un utilisateur de sorte que l'utilisateur peut mettre le dispositif (20) en contact avec la surface interne du carter de turbine où le joint (10) est présent et déplacer, de manière circonférentielle, le dispositif (20) le long du joint (10) ;
- un corps de guidage (14) configuré pour correspondre à la surface interne du carter de turbine pour guider le dispositif (10) pendant ses déplacements le long du joint (10) ;
- un outil de fraisage (19) configuré pour fraiser le joint à brosse circonférentiel (10) pendant le déplacement du dispositif (20) le long du joint (10), laissant le joint (10) dans son siège.

3. Dispositif selon la revendication 2, dans lequel il comprend un moteur (21), de préférence un moteur pneumatique ajustable, pour entraîner la rotation de l'outil de fraisage (19).

4. Dispositif selon l'une quelconque des revendications précédentes, dans lequel l'outil de fraisage (19) est en forme d'ogive, ayant un axe qui, à l'usage, est orthogonal pour guider la direction définie par le corps de guidage (14).

5. Dispositif selon l'une quelconque des revendications précédentes, dans lequel l'outil de fraisage (19) est mobile, d'une manière réglable, par rapport au corps de guidage (14).

6. Dispositif selon l'une quelconque des revendications précédentes, dans lequel l'outil de fraisage (19) est entraîné le long d'une direction de rotation (R) de sorte que les parties retirées du joint (10) pendant l'étape de fraisage, sont contraintes d'être soulevées de la surface de carter.

7. Dispositif selon l'une quelconque des revendications précédentes, dans lequel l'outil de fraisage (19) est agencé au niveau d'une partie avant du corps de guidage (14).

8. Dispositif selon la revendication 6 ou 7, dans lequel il comprend une surface magnétique (22) agencée à proximité de l'outil de fraisage (19) de sorte que les parties retirées du joint (10), pendant l'étape de fraisage, sont attirées et collectées sur la surface magnétique (22).

9. Dispositif selon l'une quelconque des revendications précédentes, dans lequel le corps de guidage (14) peut être commuté dans une pluralité de configurations différentes pour correspondre aux carters de turbine ayant une forme circonférentielle différente ou un rayon différent.

10. Dispositif selon la revendication 9, dans lequel le corps de guidage (14) comprend deux corps (15, 16) raccordés entre eux d'une manière pivotante (17).

11. Dispositif selon la revendication 10, dans lequel chaque corps (15, 16) du corps de guidage (14) est réalisé sous la forme de deux plaques parallèles, de sorte que, à l'usage, le joint (10) est agencé entre les deux plaques.

12. Dispositif selon la revendication 11, dans lequel la distance entre les plaques est réglable.

13. Dispositif selon l'une quelconque des revendications précédentes, dans lequel la surface (18) du corps de guidage (14) configurée pour venir en contact avec le carter comprend au moins un aimant (23) et/ou au moins une bille (24).
